# EUROPEAN PATENT SPECIFICATION

(11) **EP 1 527 388 B1**
(45) Date of publication and mention of the grant of the patent: **03.06.2009**
(21) Application number: 03761734.7
(22) Date of filing: 20.06.2003
(51) Int. Cl.: G06F 9/445

(54) **SOFTWARE DOWNLOAD INTO A RECEIVER**
SOFTWAREHERUNTERLADUNG AUF EINEM EMPFÄNGER
TELECHARGEMENT DE LOGICIELS DANS UN RECEPTACLE

(30) Priority: 28.06.2002 EP 02291623
(43) Date of publication of application: 04.05.2005
(73) Proprietor: Koninklijke Philips Electronics N.V., 5621 BA Eindhoven (NL)
(72) Inventor: SALIOU, Benoit, F-75008 Paris (FR); MATHIEU, Frédéric, F-75008 Paris (FR); VLOT, Marnix, F-75008 Paris (FR)
(74) Representative: Landousy, Christian
(86) International application number: PCT/IB2003/002842
(87) International publication number: WO 2004/003733

(56) References cited:
- EP-A- 0 803 812
- EP-A- 0 917 054
- EP-A- 0 959 405
- WO-A-01/22209
- WO-A-02/37203
- US-A1- 2002 073 307
- "FULLY REPROGRAMMABLE FAULT-TOLERANT FLASH MEMORY SYSTEM" IBM TECHNICAL DISCLOSURE BULLETIN, IBM CORP. NEW YORK, US, vol. 38, no. 8, 1 August 1995 (1995-08-01), pages 83-86, XP000534438 ISSN: 0018-8689
- RUBINI A: "Kernel Korner: Booting the Kernel" LINUX JOURNAL, YOUNG, WESTPORT, CT,, US, no. 38, June 1997 (1997-06), pages 1-7, XP002263835 ISSN: 1075-3583
- "RECOVERY METHOD FOR DAMAGED FIRMWARE" IBM TECHNICAL DISCLOSURE BULLETIN, IBM CORP. NEW YORK, US, vol. 38, no. 7, 1 July 1995 (1995-07-01), page 551, XP000521789 ISSN: 0018-8689

## Description

### FIELD OF THE INVENTION

The invention generally relates to transmission systems. More particularly it relates to a method of downloading software programs into a storage unit, in a transmission system.

The invention also relates to a transmission system and to a receiver of said transmission system.

It also relates to a computer program product for carrying out the method mentioned above and to a signal for carrying the computer program.

The invention applies to any communication system, including mobile communication systems. It particularly applies to broadcasting systems such as the DSS (Digital Satellite System) system and the DVB (Digital Video Broadcasting) system.

### BACKGROUND OF THE INVENTION

Bootstrap Loaders (BSLs) are widely spread in consumer products. They manage the download of software applications and allow easy upgrading of the products by replacing the current software application with a new software application. For safety reasons, BSLs are generally stored in a protected memory area where the software boots after hardware reset. The memory area is protected electrically in the factory and cannot be rendered unprotected without hardware intervention. These BSLs are generally dedicated to a technology, including e.g. specific transport protocols, which are not standardized, linked to the system used and to a kind of application that has to respect the same protocol. When changing technology, in order to download a new software application, it is thus necessary to also download the associated new BSL. The current BSL will thus not be used any more, although it uses protected memory space, which is now wasted for the rest of the application. Moreover, the new BSL is generally downloaded in a memory area, which is not protected and can thus suffer from damages caused e.g. by voluntary or involuntary software erasure.

An article in IBM Technical Disclosure Bulletin "Fully Reprogrammable Fault-Tolerant FLASH Memory System" Vol. 38, No. 08 August 1995 discloses a FLASH architecture. In this solution the FLASH device is partitioned into two blocks and the block locations are allowed to be interchanged via paging so that either of the two blocks can be used as the boot block. In the method the non-boot block is erased and it is then reprogrammed with a critical code. Then the locations of the two blocks are swapped by using the paging mechanism. Now the block containing the new critical code is the new boot block and the other block can be reprogrammed.

International publication WO01/22209 discloses a method of organising stored information on a non-volatile, reprogrammable semiconductor memory and in the method the memory is partitioned into a plurality of partitions, each having a defined address. A defined address for one partition is stored in another partition.

### OBJECT AND SUMMARY OF THE INVENTION

It is an object of the invention to provide a method, which allows secure, memory-safe and efficient downloading of software programs into a receiver and thus yields a better quality of service for the end user. The method advantageously allows replacement of complete embedded software programs including a boot code (or Bootstrap Loader) and application code (or main application) dedicated to a technology (e.g. the DSS technology) by another one dedicated to another technology (e.g. the DVB technology). The change in technology mentioned above may refer to a transmission technology, such as DVB or DSS, but may also refer to a conditional access technology and / or broadcaster technology, or to any non-compatible change in the global system.

To this end, the invention proposes a first method according to claim1.

This first method advantageously allows re-using the memory space used by the current boot code, while avoiding that the current boot code can be damaged before the new boot code is validly downloaded.

In accordance with another embodiment of the invention, a second method is proposed according to claim 2.

In the second method, the operations can be done in a secure and memory-safe way, advantageously including the ability to go back to the previous software, the manufacturer keeping the possibility to ignore the second technology. Moreover, the method is memory-efficient because the memory space used for the current boot code can advantageously be re-used for storing other data like, for example, the new application code.

### BRIEF DESCRIPTION OF THE DRAWINGS

The invention and additional features, which may be optionally used to implement the invention to advantage, are apparent from and will be elucidated with reference to the drawings described hereinafter, wherein:
- Fig. 1 is a diagram illustrating an example of a first method in accordance with a first embodiment of the invention,
- Fig. 2 is a diagram illustrating an example of a second method in accordance with a second embodiment of the invention,
- Fig. 3 is a diagram illustrating an example of a system in accordance with the invention.

### DETAILED DESCRIPTION OF THE DRAWINGS

A technique will be described for an efficient and reliable downloading of new software into a consumer equipment device, called a receiver, like e.g. a set-top box or a digital TV. Efficiency is estimated in terms of non-volatile memory needed to perform the download; reliability is estimated in terms of the resistance of the process against interruption. The download can be performed in different ways e.g. over the air, by cable transmissions, satellite links, using local download or via hardware module, such as e.g. cards, external devices, etc..

The new software needs to be written into a persistent (non volatile) memory (e.g. a FLASH memory). If the process is interrupted (e.g. by a power switch-off), while the process of overwriting the old software with the new one is not completely finished, the software will generally no longer work. One solution is to avoid overwriting the old software. However, the size of the persistent memory footprint has to be large enough to store both new and old software, which is not efficient.

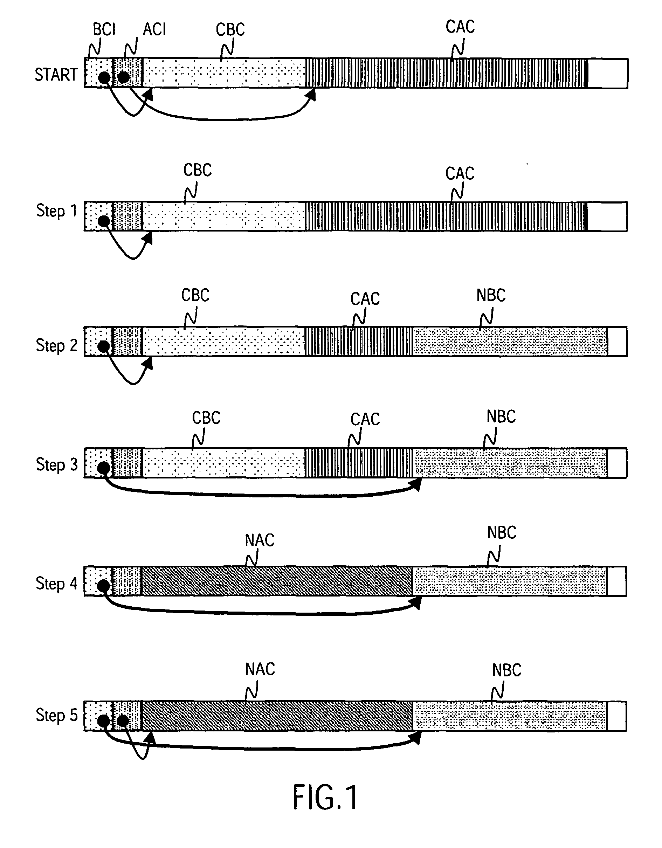

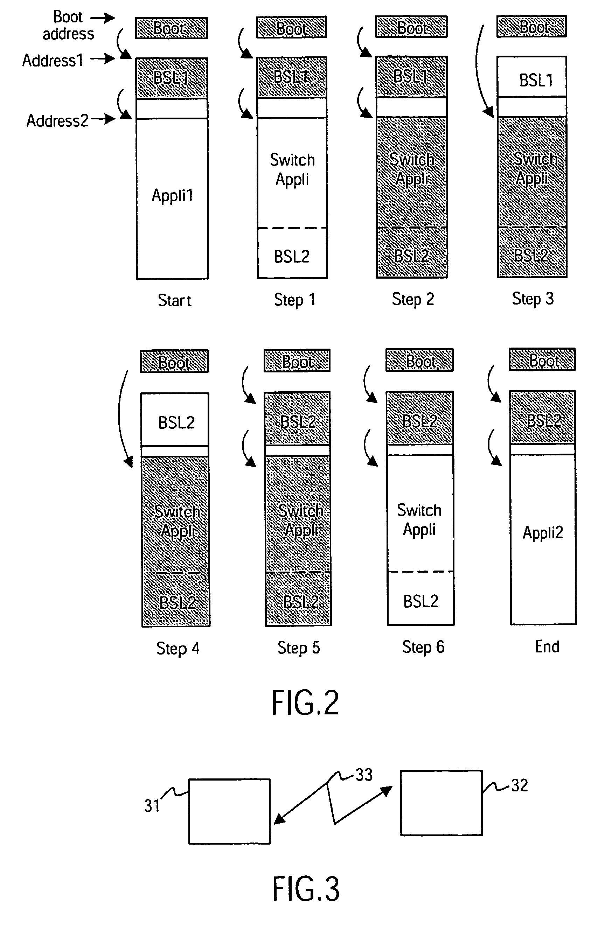

Two methods are proposed and will be described with reference to Fig. 1 and 2, respectively, for efficient downloading of software programs into a storage unit. Both methods apply to software programs, which include a boot code and an application code, the boot code allowing of downloading the program code in a storage unit. For both methods, it is supposed that the storage unit comprises at least a current (old) software program stored, including a current (old) boot code and a current (old) application code.

The first method comprises the following steps :
- upon a download request, downloading a new boot code in a location, which does not overwrites the current boot code,
- indicating that the new boot code replaces the current boot code,
- indicating that the current application code may be corrupted,
- downloading a new application code associated with the new boot code in a location, which does not overwrite the new boot code,
- indicating that the new application code replaces the current application code.

This first method is illustrated in greater details in a 5-step process with reference to Fig. 1, wherein the blocks represent memory areas of the storage unit :
- Start: the current software is split into two parts: one which is able to perform a software download, called the current boot code and denoted CBC, and the other part, which complements this functionality to make the total application, called the current application code, denoted CAC. Persistent flags, called "indicators" are used and combine the function of flagging reliability or not with the position where the respective code can be found in the persistent memory. A boot code indicator flag, denoted BCI, indicates which boot code is valid to be used. An application code indicator flag, denoted ACI, indicates which application code is valid to be used.
- Step 1: Before new software is downloaded, the flag ACI is set to signal that the current application code may be corrupted.
- Step 2: The new boot code NBC is written into the persistent storage memory. In the process the current application code CAC may be overwritten.
- Step 3: After successfully writing the new code, the flag BCI is set to indicate that from now on the new boot code NBC should be used rather than the current one CBC.
- Step 4: The new application code NAC can then be written in the persistent memory.
- Step 5: When the new application code is successfully written in the persistent memory, a persistent flag is set to indicate that the new application code is ready.

In steps 2, 3 and 4, any operation of writing into the persistent memory may be preceded by a provisional load into a volatile memory e.g. a RAM (Random Access Memory) in order that the integrity of the data can be checked.

As a security measure, the current boot code can be copied (backed up) to another part of the persistent memory of the receiver before the new boot code is written over the current boot code, or the current boot code can be copied to an alternative location while writing the new boot-code into the memory previously storing the current boot code, such that if the process of copying the new code is interrupted, the receiver can detect this situation and restore the current boot code. Since boot codes usually have a very small size compared to the size of the application codes, and since the memory space used for the current boot code can be used for storing the new application code, this security measure will either not involve any extra memory space or will only involve a very limited area of reusable memory space.

For ultimate reliability in step 3, it is possible to use a single memory bit to indicate which of the new boot images is correct. In case the process of writing this bit is interrupted, it may read as 0 or 1, but the outcome is arbitrary: any of the two images is good.

It is also possible that the application code can be split up into multiple parts. If only the boot code needs to be replaced it may be necessary to overwrite parts of the application code with the new boot code. Then only the overwritten parts of the application code need to be re-loaded.

As far as implementation is concerned, a "flash" file system can advantageously be used for carrying out the method mentioned above, for the software management. In that case, a manager application has to ensure that it first makes sufficient space in the file system to allow a new boot application to be stored before the old one is overwritten, and that the flagging/indication is done reliably, such that there cannot occur an inconsistent state if the process is stopped half way. In particular it needs to be guaranteed that the file pointers can be updated "atomically": i.e. in one action, or that the single bit approach is used. It is also possible to check if the boot code is valid by checking a checksum computed on the whole boot code. If the image is partially overwritten, it will turn out to be invalid. Then the system can look for an alternative.

Last but not least, it may be important or convenient in some systems that the boot code is located at the same position in the memory because there may be constraints on its location. In such systems, instead of writing the new boot code in another location, the old boot code can be moved there before or during the copying of the new boot code. In case the process is interrupted, the device can then still recover the old backup boot code and possibly copy it at its original location or restart the process of downloading the new boot code. Detection that the (partially written) boot-code is not complete can be done through a "pointer", a "bit" or a "checksum".

The second method is preferred when the current boot code is stored in the boot area, that is to say, in a location near the boot address. Then an inopportune power off during writing in this area when replacing the current boot code with a new one may corrupt the boot area and definitely crash the box. A solution to avoid this, which consists of the second method, is that the software would boot on another sector of the memory that would never change and would just take the decision to jump onto addresses where there is always a boot code stored, preferably in a protected memory area. Only two distinct addresses, address1 and address2, are indicated in Fig. 2 but there may be more addresses. This is for safety reasons : if an inopportune power-off occurs while writing, there will always be a valid BSL to be executed. This boot sector does not need many software resources. It is a very small application that does not overload much the global size. As it will never be erased, it can even be stored in ROM memory. In case of low hardware constraints, the boot sector can include a proprietary local download system, e.g. through a serial link.

This second method of downloading software programs into the storage unit of a receiver before a change in the system occurs is described below. It comprises the steps of:
- defining a boot sector for jumping to a position of the storage unit where a boot code is stored in order to validate the use of said boot code, the boot sector initially pointing at the first position, where the current boot code is stored
- upon a download request due to a change in the system, downloading a new software program in a second position including a new boot code and a new application code, which is meant to work in the new system,
- jumping to the second position where the new boot code is stored.

The memory space used for the current boot code can advantageously be re-used e.g. for storing the new application code.

In systems, where it is important that the boot code is always located at the same position, the method mentioned above may be completed with the steps of:
- replacing the current boot code with the new boot code at the first position,
- jumping to the first position.

As mentioned above, the boot sector is preferably located in a protected storage area, which may be inside the storage unit or separate from the storage unit.

In a preferred embodiment of the second method, the boot code and/or the application code are stored in an area of the storage unit, which area can be alternatively protected and unprotected to be overwritten under specific software conditions. This preferred embodiment takes advantage of a new technology of the persistent memory that allows protecting / unprotecting memory area by software instructions.

The new software program may include an intermediate application code, which is a link between the current application code and the new application code enabling a user to parametrize his receiver into the new system, e.g. for changing a subscriber card, an antenna, an antenna pointing, for calling a phone center to validate new services, etc.

Leaving aside implementation aspects, a preferred embodiment of the second method can be summarized as follows:
- Step 1: when a download request is detected; the current boot code BSL1 downloads normally the new application including the new boot code BSL2.
- Step 2: the new boot code BSL2 memory area is protected.
- Step 3: the current boot code BSL1 memory area is unprotected. From now on, the boot sector will jump onto the new boot code BSL2.
- Step 4: the current boot code BSL1 is erased.
- Step 5: normal download to the new boot code BSL2 can be requested.
- End: the new boot code BSL2 loads Appli2 in accordance with the second protocol; returning back to the normal mode; the operation being consequently completely reversible.

Fig. 2 illustrates in greater details an embodiment of this second method. The blocks represent memory areas of the storage unit. The current and new boot codes are denoted BSL1 and BSL2, respectively. The current and new application codes are denoted Appli 1 and Appli2, respectively. The boot sector is denoted Boot. The method comprises the following steps:
- Start: The boot sector normally jumps onto the current boot code BSL1 that will jump onto the current application Appli1 if no download is requested.
- Step 1: Appli 1 detects a download request: it resets the box that boots on the current boot code BSL1 that normally downloads the new application, but which is actually a link between the future new boot code BSL2 and an intermediate valid application called Switch Appli. Finally, the current boot code BSL1 jumps onto the intermediate valid application Switch Appli. At this stage, the new boot code BSL2 is simply concatenated to the Switch Appli, as application data, and is not yet functional. Therefore, the current boot code BSL1 jumps directly to Switch Appli entry point. The point in linking the new boot code BSL2 with the Switch Appli is to limit the number of downloads.
- Step 2: Switch Appli protects the memory area where it is stored.
- Step 3: Switch Appli unprotects the memory area where BSL1 is stored. From now on, after a reset, the boot sector will jump onto Switch Appli. Switch Appli can display a man-machine interface to warn a user of a change and possibly ask him to adapt some parameters of the system, such as, e.g. change the orientation of an antenna, enter a new access code for accessing another network, etc..
- Step 4: Switch Appli erases the current boot code BSL1 and eventually or if required, writes the new boot code BSL2 to its final location, e.g. in place of the current boot code BSL1
- Step 5: Switch Appli protects the new boot code BSL2 memory area. Consequently, from now on, the boot sector will jump onto the new boot code BSL2.
- Step 6: Switch Appli unprotects the memory area where it is stored; requests a normal download to the new boot code BSL2 and resets the box.
- End: BSL2 loads Appli2 respecting the second protocol, we are back to the normal mode. Consequently, this operation is completely reversible.

In the example illustrated in Fig. 2, at each reset, the boot sector will jump onto the highest protected sector (see arrows in Fig. 2). However, other conditions may be defined.

Fig. 3 shows a system in accordance with the invention comprising a transmitter 31, a receiver 32 and a transmission channel 33 for downloading software from the transmitter to the receiver in accordance with one of the methods described previously, via the transmission channel. During downlink transmission in a broadcasting system, for example, the user equipment would be the receiver and the base station or server would be the transmitter.

In the case of digital receivers of a broadcasting system, there are currently 2 standards (DVB and DSS) that can be currently supported by the same hardware but, for software size reason, are supported by dedicated software (BSL and application). The invention enables a product to be launched making use of a technology (e.g. compatible with the DSS standard) and to keep the possibility of downloading in the future a completely different technology (e.g. compatible with the DVB standard). The provider of the receiver comprising software, which is initially compatible with the current system technology, does not need to know the specifications of new systems when launching the product.

The drawings and their description hereinbefore illustrate rather than limit the invention. It will be evident that there are numerous alternatives, which fall within the scope of the appended claims. In this respect, the following closing remarks are made. There are numerous ways of implementing functions by means of items of hardware or software, or both. In this respect, the drawings are very diagrammatic, each representing only one possible embodiment of the invention. Thus, although a drawing shows different functions as different blocks, this by no means excludes that a single item of hardware or software carries out several functions, nor does it exclude that an assembly of items of hardware or software, or both, carries out a function.

Any reference sign in a claim should not be construed as limiting the claim. Use of the verb "to comprise" and its conjugations does not exclude the presence of elements or steps other than those stated in a claim. Use of the article "a" or "an" preceding an element or step does not exclude the presence of a plurality of such elements or steps.

## Claims

1. In a transmission system, a method of downloading software programs into a storage unit, the software programs including a boot code and an application code, the boot code allowing downloading of the application code, the storage unit comprising at least a current software program stored including a current boot code stored in the storage unit at a first position, the method comprising the steps of:
- defining a boot sector for jumping to a position of the storage unit where a boot code is stored in order to validate the use of said boot code, the boot sector initially pointing at the first position, where the current boot code is stored,
- upon a download request, downloading a new software program in a second position including a new boot code and an intermediate application code,
- jumping to the second position where the new boot code is stored,
wherein the method further comprising the following steps performed by the intermediate application code which is a link between the current application code and a new application code:
- unprotecting a memory area where the current boot code is stored,
- enabling a user to change parameters of the transmission system such that it is suitable for executing the new application code,
- erasing the current boot code and writing the new boot code in place of the current boot code,
- protecting the new boot code memory area, and
- replacing the intermediate application code by the new application code when the new boot code memory area has been protected.

2. A method as claimed in claim 1, wherein the step of jumping to the second position where the new boot code is stored is followed by :
- replacing the current boot code with the new boot code at the first position,
- jumping to the first position.

3. A method as claimed in claim 1, wherein the boot sector is located in a protected storage area of the storage unit.

4. A method as claimed in claim 1, wherein the boot sector is located in a protected storage area separate from the storage unit.

5. A method as claimed in claim 1, wherein the current boot code is stored in a protected area of the storage unit, which area can be unprotected to be overwritten under specific software conditions.

6. A method as claimed in claim 1, wherein the new software program is stored in an area of the storage unit, which area can be protected and unprotected to be overwritten under specific software conditions.

7. A receiver for receiving software programs transmitted by a transmitter, the receiver comprising means for carrying out the method as claimed in any one of claims 1 to 6.

8. A receiver as claimed in claim 7, wherein said means for carrying out the method as claimed in any one of claims 1 to 8 include a file system.

9. A receiver as claimed in claim 7, wherein the storage unit is a persistent memory allowing protecting / unprotecting memory area upon software instructions.

10. A transmission system comprising a transmitter for transmitting software programs and at least a receiver for receiving said software programs, the receiver comprising means for carrying out the method as claimed in any one of claims 1 to 6.

11. A computer program product for a receiver computing a set of instructions; which when loaded into the receiver, causes the receiver to carry out the method as claimed in any one of claims 1 to 6.

12. A signal for carrying a computer program, the computer program being arranged to carry out the method as claimed in claim 1.

## Patentansprüche

1. In einem Übertragungssystem ein Verfahren zum Herunterladen von Softwareprogrammen in eine Speichereinheit, wobei die Softwareprogramme einen Bootcode und einen Applikationscode enthalten, wobei der Bootcode das Herunterladen des Applikationscodes ermöglicht, wobei die Speichereinheit wenigstens ein gespeichertes aktuelles Softwareprogramm enthält, das einen aktuellen Bootcode umfasst, der in der Speichereinheit an einer ersten Stelle gespeichert ist, wobei das Verfahren die nachfolgenden Verfahrensschritte umfasst:
- das Definieren eines Bootsektors zum Springen auf eine Position der Speichereinheit, wo ein Bootcode gespeichert ist, damit die Verwendung des genannten Bootcodes wirksam gemacht wird, wobei der Bootsektor zunächst auf die erste Position zeigt, wo der aktuelle Bootcode gespeichert ist,
- bei einem Antrag zum Herunterladen das Herunterladen eines neuen Softwareprogramms an eine zweite Position mit einem neuen Bootcode und einem Zwischenapplikationscode,
- das Springen auf die zweite Position, wo der neue Bootcode gespeichert wird,
wobei das Verfahren weiterhin die nachfolgenden Verfahrensschritte umfasst, die von dem Zwischenapplikationscode durchgeführt werden, der eine Kopplung zwischen dem aktuellen Applikationscode und einem neuen Applikationscode ist:
- das Entschützen eines Speichergebietes, in dem der aktuelle Bootcode gespeichert wird,
- das Anbieten einer Möglichkeit an den Benutzer, Parameter des Übertragungssystems derart zu ändern, dass dies zum Durchführen des neuen Applikationscodes geeignet ist,
- das Löschen des aktuellen Bootcodes und das Einschreiben des neuen Bootcodes an die Stelle des aktuellen Bootcodes,
- das Schützen des neuen Bootcodespeichergebietes, und
- das Ersetzen des Zwischenapplikationscodes durch den neuen Applikationscode, wenn das Speichergebiet des neunen Bootcodes geschützt worden ist.

2. Verfahren nach Anspruch 1, wobei dem Verfahrensschritt des Sprungs auf die zweite Position, wo der neue Bootcode gespeichert wird, die nachfolgenden Verfahrensschritte folgen:
- das Ersetzen des aktuellen Bootcodes durch einen neuen Bootcode in der ersten Position,
- das Springen in die erste Position.

3. Verfahren nach Anspruch 1, wobei der Bootsektor sich in einem geschützten Speichergebiet der Speichereinheit befindet.

4. Verfahren nach Anspruch 1, wobei der Bootsektor sich in einem von der Speichereinheit getrennten geschützten Speichergebiet befindet.

5. Verfahren nach Anspruch 1, wobei der aktuelle Bootcode in einem geschützten Gebiet der Speichereinheit gespeichert ist, wobei dieses Gebiet entschützt werden kann, damit es unter bestimmten Softwarebedingungen überschrieben werden kann.

6. Verfahren nach Anspruch 1, wobei das neue Softwareprogramm in einem Gebiet der Speichereinheit gespeichert wird, wobei dieses Gebiet geschützt oder nicht geschützt sein kann, damit es unter bestimmten Softwarebedingungen überschrieben werden kann.

7. Empfänger zum Empfangen von Softwareprogrammen, die von einem Sender her übertragen werden, wobei der Empfänger Mittel aufweist zum Durchführen des Verfahrens nach einem der Ansprüche 1 bis 6.

8. Empfänger nach Anspruch 7, wobei die genannten Mittel zum Durchführen des Verfahrens nach einem der Ansprüche 1 bis 8 ein Dateiverwaltungssystem umfassen.

9. Empfänger nach Anspruch 7, wobei die Speichereinheit ein permanenter Speicher ist, der Schützen / Entschützen eines Speichergebietes bei entsprechenden Softwareinstruktionen ermöglicht.

10. Übertragungssystem mit einem Sender zum Übertragen von Softwareprogrammen und mit wenigstens einem Empfänger zum Empfangen der genannten Softwareprogramme, wobei der Empfänger Mittel zum Durchführen des Verfahrens nach einem der Ansprüche 1 bis 6 aufweist.

11. Computerprogrammprodukt für einen Empfänger, der einen Satz von Instruktionen berechnet, die, wenn sie in den Empfänger geladen werden, dafür sorgen, dass der Empfänger das Verfahren nach einem der Ansprüche 1 bis 6 durchführt.

12. Signal zum Durchführen eines Computerprogramms, wobei das Computerprogramm dazu vorgesehen ist, das Verfahren nach Anspruch 1 durchzuführen.

## Revendications

1. Procédé, dans un système de transmission, destiné à télécharger des programmes logiciels dans une unité de stockage, les programmes logiciels comprenant un code d'amorçage et un code d'application, le code d'amorçage permettant le téléchargement du code d'application, l'unité de stockage comprenant au moins un programme logiciel actuel stocké incluant un code d'amorçage actuel stocké dans l'unité de stockage à une première position, le procédé comprenant les étapes consistant à :
- définir un secteur d'amorçage pour sauter à une position de l'unité de stockage à laquelle un code d'amorçage est stocké pour valider l'utilisation dudit code d'amorçage, le secteur d'amorçage pointant initialement à la première position, à laquelle le code d'amorçage actuel est stocké,
- lors d'une demande de téléchargement, télécharger un nouveau programme logiciel à une deuxième position incluant un nouveau code d'amorçage et un code d'application intermédiaire,
- sauter à la deuxième position à laquelle le nouveau code d'amorçage est stocké,
dans lequel le procédé comprend en outre les étapes suivantes effectuées par le code d'application intermédiaire qui est un lien entre le code d'application actuel et un nouveau code d'application :
- déprotéger une zone de mémoire dans laquelle le code d'amorçage actuel est stocké,
- permettre à un utilisateur de changer des paramètres du système de transmission de manière à ce qu'il soit apte à exécuter le nouveau code d'application,
- effacer le code d'amorçage actuel et écrire le nouveau code d'amorçage à la place du code d'amorçage actuel,
- protéger la zone de mémoire de nouveau code d'amorçage, et
- remplacer le code d'application intermédiaire par le nouveau code d'application lorsque la zone de mémoire de nouveau code d'amorçage est protégée.

2. Procédé selon la revendication 1, dans lequel l'étape consistant à sauter à la deuxième position à laquelle le nouveau code d'amorçage est stocké est suivie par les étapes consistant à :
- remplacer le code d'amorçage actuel par le nouveau code d'amorçage à la première position,
- sauter à la première position.

3. Procédé selon la revendication 1, dans lequel le secteur d'amorçage est situé dans une zone de stockage protégée de l'unité de stockage.

4. Procédé selon la revendication 1, dans lequel le secteur d'amorçage est situé dans une zone de stockage protégée distincte de l'unité de stockage.

5. Procédé selon la revendication 1, dans lequel le code d'amorçage actuel est stocké dans une zone protégée de l'unité de stockage, laquelle zone peut être déprotégée pour être réécrite dans des conditions logicielles spécifiques.

6. Procédé selon la revendication 1, dans lequel le nouveau programme logiciel est stocké dans une zone de l'unité de stockage, laquelle zone peut être protégée et déprotégée pour être réécrite dans des conditions logicielles spécifiques.

7. Récepteur destiné à recevoir des programmes logiciels transmis par un émetteur, le récepteur comprenant des moyens pour effectuer le procédé selon l'une quelconque des revendications 1 à 6.

8. Récepteur selon la revendication 7, dans lequel lesdits moyens pour effectuer le procédé selon l'une quelconque des revendications 1 à 8 comprennent un système de fichiers.

9. Récepteur selon la revendication 7, dans lequel l'unité de stockage est une mémoire persistante permettant de protéger/déprotéger une zone de mémoire selon des instructions logicielles.

10. Système de transmission comprenant un émetteur pour transmettre des programmes logiciels et au moins un récepteur pour recevoir lesdits programmes logiciels, le récepteur comprenant des moyens pour effectuer le procédé selon l'une quelconque des revendications 1 à 6.

11. Produit de programme informatique pour un récepteur calculant un jeu d'instructions, qui lorsqu'il est chargé dans le récepteur, amène le récepteur à effectuer le procédé selon l'une quelconque des revendications 1 à 6.

12. Signal pour effectuer un programme informatique, le programme informatique étant agencé pour effectuer le procédé selon la revendication 1.
